# NEW EUROPEAN PATENT SPECIFICATION

(11) **EP 0 950 160 B2**
(45) Date of publication and mention of the opposition decision: **25.05.2011**
(45) Mention of the grant of the patent: 13.11.2002
(21) Application number: 98955508.1
(22) Date of filing: 21.10.1998
(51) Int. Cl.: F24J 2/00, F24J 2/40, E04B 1/76

(54) **FACADE SYSTEM WITH A TRANSLUCENT POROUS INSULATING MATERIAL**
FASSADENSYSTEM MIT EINEM TRANSLUZENTEN PORÖSEN DÄMMSTOFF
ENSEMBLE FACADE AVEC MATERIAU ISOLANT, POREUX ET TRANSLUCIDE

(30) Priority: 21.10.1997 DE 19746429; 21.10.1997 DE 29718676 U
(43) Date of publication of application: 20.10.1999
(73) Proprietor: SAINT-GOBAIN ISOVER, 92400 Courbevoie (FR)
(72) Inventor: GEISSELS, Alexander, D-68526 Ladenburg (DE); KASPAR, Franz-Josef, D-68526 Ladenburg (DE); ROYAR, Jürgen, D-68526 Ladenburg (DE); SCHLÖGL, Joachim, D-68305 Mannheim (DE)
(74) Representative: Kuhnen, Rainer-Andreas
(86) International application number: PCT/EP1998/006696
(87) International publication number: WO 1999/020950

(56) References cited:
- EP-A- 0 123 091
- EP-A- 0 243 912
- EP-A- 0 250 691
- EP-A- 0 725 918
- EP-A- 0 783 164
- WO-A-88/08906
- WO-A-92/09760
- CH-A- 597 453
- CH-A- 678 203
- DE-A- 2 608 263
- DE-A- 3 529 752
- DE-A- 4 206 317
- DE-A- 19 522 645
- DE-C- 19 543 727
- DE-U- 29 718 676
- GB-A- 1 571 599
- US-A- 3 183 996
- US-A- 4 706 435
- US-A- 5 016 412
- US-A- 5 185 197
- McGraw-Hill Concise Encyclopedia of science and technology, 3rd edition 1994, p 1428.
- Int.J. Solar Energy, 1992, vol.11, pp.117 to 134.
- RWE Energie Bau-Handbuch 11, Ausgabe 1/94, pp.17/1, 17/3 und 17/4;
- Fachartikel "Farbige Dämstoffe und Solarenergie im System", Sonderdruck aus Fasadentechnik, Heft 3/98;
- Untersuchungsbericht, "Untersuchung lichttechnischer und strahlenphysikalischer Kenngrössen nach Din 67 507" des Fraunhofer-Instituts für Bauphysik vom 28.April 1998;
- Forschungsbericht "Bewertung des solaren Energiegewinns von transparent verglasten und farbig kaschierten Mineralwollesystemen" des Fraunhofer-Instituts für Energiesysteme vom 22 Januar 2001.

## Description

The present invention relates to a façade system with a translucent porous insulating material of mineral or organic fibres according to the precharacterizing clause of Claim 1.

A generically determinative facade system is known from EP 0 362 242 or from WO 88/08906. This known façade surfacing has an insulating layer of heat-insulating material with light-admitting weatherproofing provided on the outside in the form of a transparent outer covering, produced for example from silicate glass or synthetic glass. The insulating layer, which may be produced, for example, from a multiplicity of factory-prefabricated glass-fibre or mineral-fibre insulating boards which are fastened on the outer wall of the building adjacently in a surface-covering manner, is designed in such a way that a temperature profile can be adjusted, when there is usable solar irradiation, with a maximum value within the insulating layer. For this purpose, the insulating layer is designed to be opaque or translucent between its outer and inner bounding surfaces, with a transmittance τ of less than 10% and an absorbance a of more than 15%.

The innovative façade surfacing has proved to be entirely serviceable, but has the disadvantage that, with the outer covering with which it is provided, designed as a transparent layer and made, for example, of silicate glass, synthetic glass or weatherproof sheetings, it is not possible to achieve building façades which are visually and/or aesthetically pleasing for the house owner or viewer. This is true because in the case of such a configuration of the known façade system there can in any event be clearly seen the outer or viewer-side surface of the insulating layer, which lies behind the transparent weatherproofing layer or outer covering and the surface structure of which cannot lend a building façade a pleasing exterior appearance. Although it has already been proposed in EP 0 362 242 or in WO 88/08906 to tint the outer covering by colouring the panels forming it, this is very costly and is not possible in any desired colour. Alternatively, it has been proposed in EP 0 362 242 to colour or pattern the outer surface of the insulating layer or provide it with motifs. Quite apart from the fact that this proposal has not proved to be feasible in practice, colouring the outer insulating layer does not in any way have the effect of lending its surface a different appearance than that which is predetermined by the structure or position of the fibres forming the insulating layer. As already stated above, the latter is, however, not satisfactory from a visual and/or aesthetic viewpoint.

A further problem is the appearance of the region where the insulating boards are joined. Here there is the great risk that, in particular, with a dark outer surface of the insulating layer, if the insulating boards are not laid in line or accurately, the mineral wool lying behind, which for example is lighter, becomes visible and, as a light line, additionally has an adverse effect on the overall appearance of the façade.

EP-A-0 243 912 discloses a wall or window element and/or wall portion beneath a window element consisting of an insulation layer disposed between two panels or the like. The insulation layer is foamed of a material which reduces convective heat transfer and thermal radiation. The insulation layer and the panels are permeable by the solar radiation spectrum, and the external panel which bounds the insulation layer on the side of the solar radiation is an absorptive panel which has maximally high absorptivity for the non-visible portion of the solar radiation spectrum.

EP-A-0 123 091 discloses a wall comprising or consisting of a layer, which is attached on the outside in approximately parallel orientation, and which is exposed to the solar radiation for absorbing the solar radiation energy.

The object of the present invention is to provide a low cost design for a façade system as defined in the preamble of claim 1.

This object is achieved by the characterizing features of Claim 1.

Further advantageous embodiments of the present invention are the subject of the subclaims.

For example, controlling the light transmittance τ can take place in a particularly good way by means of a different colour graduation of the coloured layer. Consequently, allowance can be advantageously made for different angles of incident light radiation and radiation intensities by appropriate tinting. This makes it possible for the first time to control the light transmittance τ by increased light reflection or light absorption a. The light reflection or absorption of the coloured layer can be advantageously controlled here by a suitable pigmentation of the respectively chosen colour or by the incorporation of metal particles in the coloured layer. This opens up a wide range of possible variations with regard to the surface design of the coloured layer, the choice of colour and colour intensity and also the controlling of the light transmittance τ in every respect

It is at the same time also of advantage that the coloured layer is for the first time of a colour-fast design with respect to UV irradiation. A clear cost reduction is evident by providing a glass panel, in particular a commercially available glass panel, as the transparent weatherproofing or transparent outer covering, since tinted types of glass are more expensive than clear types of glass. For the visual and/or aesthetic design of the façade to be further optimized, there may additionally be the case in the facade system according to the invention that the glass panel itself is provided with a pattern, in particular with a grid-shaped or symbolic pattern.

The fact that the light transmittance τ is for the first time controlled by means of the coloured layer makes it possible to ensure in an aesthetically particularly pleasing way that in the summer there is no overheating of the building wall adjoining the façade system. This takes place because the insulating layer with the coloured layer is designed such that a temperature profile is achieved, when there is usable solar irradiation, with a maximum value within the insulating layer, a light transmittance τ of less than 10% being set between its outer and inner bounding surfaces.

The façade system can be constructed in a quick and efficient way, by applying the insulating layer and the coloured layer together in the form of factory-prefabricated facade insulating boards. When doing so, the coloured layer preferably protrudes beyond the insulating layer along two board edges.

In a particularly advantageous embodiment, the coloured layer is designed in such a way that, for example along two angularly neighbouring board edges, it protrudes beyond the latter. Consequently, when the façade insulating boards are applied to the building wall, the abutting edges in the region of the joins between neighbouring insulating boards are covered by the overlapping protruding coloured layer. Consequently, the occurrence of differently coloured or light lines is eliminated in a particularly advantageous way, so that the overall appearance of the façade is not adversely affected if, for example, the joins of the façade insulating boards are not in line, since the joins between the insulating boards are covered by the overlap and are consequently not visible. A façade which appears uniformly of the desired colour throughout is the result.

In a further advantageous embodiment, the coloured layer is applied to the prefabricated façade insulating board in such a way that, similar to the lamination of an edge strip mat, it protrudes parallel to and along two opposite board edges beyond the latter. Consequently, abutting edges in the region of the join between neighbouring insulating boards are likewise covered by the overlapping protruding coloured layer, which presupposes, however, that the individual façade insulating board is of a square design and, when being applied to the building wall can be turned alternately through 90°, so that, in a way analogous to the imbricated overlapping explained above, complete coverage of all the joins is likewise achieved. What is more, a square form with parallel projections makes it possible for the façade insulating boards to be produced at low cost, since, starting with an initially endless mineral wool web, the latter can be continuously laminated with the coloured felt directly on the line and subsequently divided into the finished façade insulating boards.

According to the invention the coloured layer is transparent or translucent. This improves the visual appearance of the joins, and it is not required for a felt strip to be stuck over the joins at the site.

The invention is explained in more detail below on the basis of two exemplary embodiments with reference to the drawing, in which:
- Figure 1: shows a perspective view of a first, rectangular embodiment of a façade insulating board according to the invention;
- Figure 2: shows a plan view of a detail of a façade insulated with the façade insulating boards shown in Figure 1;
- Figure 3: shows a perspective view of a second, square embodiment of a façade insulating board according to the invention; and
- Figure 4: shows a plan view of a detail of a façade insulated with the façade insulating boards shown in Figure 3.

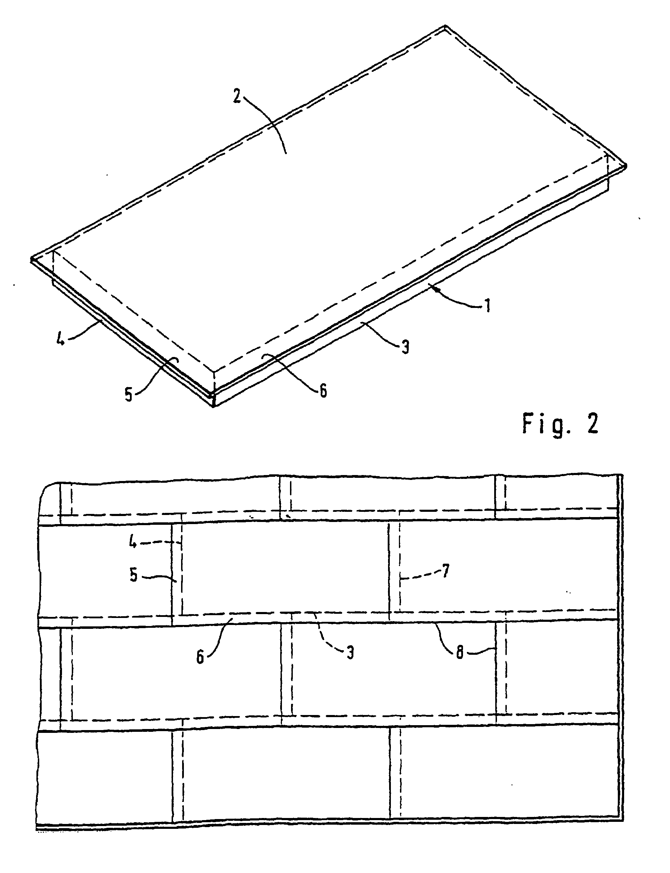

Shown in Figure 1 in a perspective view is a rectangular façade insulating board 1, which is laminated with a coloured felt 2. The felt 2 protrudes along two angularly neighbouring board edges 3 and 4 beyond the latter, to be precise denoted by 5 and 6.

In Figure 2, in the plan view shown of a detail of a façade insulated with the façade insulating boards 1, in which the insulating boards 1 are arranged adjacently with their joins offset, the joins of the insulating boards 1 are represented by dashed lines and are denoted by 7. The visible felt limitations are denoted by 8. The respective projections 5, 6 of the coloured felt 2 thereby form an imbricated overlap similar to a slate-covered roof.

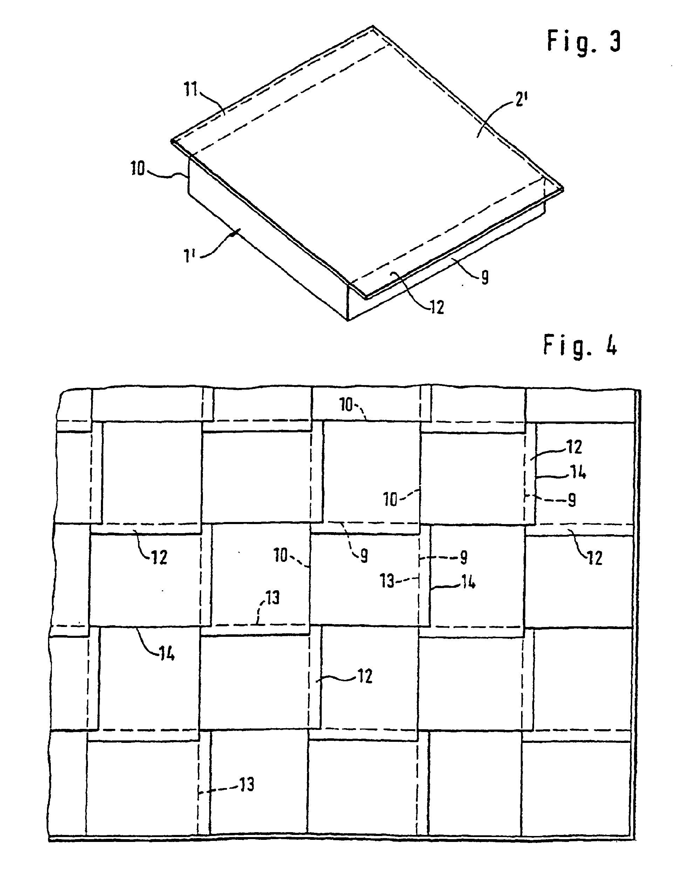

Shown in Figure 3 in a perspective view is a square facade insulating board 1', which is laminated with a coloured felt 2'. The felt 2' protrudes along two parallel opposite board edges 9 and 10 beyond the latter, to be precise denoted as projections 11 and 12.

In Figure 4, in the plan view shown of a detail of a façade insulated with the façade insulating boards 1', in which the square insulating boards 1' are arranged adjacently and alternately turned through 90°, the joins between the insulating boards 1' are represented by dashed lines and are denoted by 13. The felt limitations denoted by 14 cannot, however, be seen as such in the overall appearance of the façade, which instead appears as a uniform coloured surface on account of the respective overlaps of the coloured felt.

The results of a test investigating the façade insulating boards 1 and 1' according to the invention from their physical aspects relating to construction are also presented below. The test served for determining characteristic optical and radiation-physical variables according to DIN 67507, June 1980 edition, and in particular for determining the radiant absorbance. Used as samples were five specimens with a mineral wool thickness of about 4 mm and a sample size of 5 ∗ 5 cm2 for a measuring area of 1 ∗ 1 cm2. The specimens differed in the colours of the sample outer surfaces, which were red (RAL 3002), blue (RAL 5019), green (RAL 6016), yellow (RAL 1021) and grey (RAL 7035).

The radiant transmittance τe, the radiant reflectance pe and the radiant absorbance ae = 1 - τe - ρe of the test material were calculated from spectral measurements in the wavelength range from 280 nm to 2500 nm and the spectral energy distribution for perpendicularly incident global radiation. The transmitted or reflected radiation was spatially integrated here in the spectral measurement ("Ulbricht sphere"). Furthermore, the radiant absorbance is given only as an overall value, i.e. the local distribution of the absorption over the cross-section of the sample has not been determined.

The test produced the following results:

| Sample | Radiant transmittance τₑ | Radiant reflectance ρₑ | Radiant absorbance aₑ |
|---|---|---|---|
| red (RAL 3002) | 0.06 | 0.48 | 0.46 |
| blue (RAL 5019) | 0.04 | 0.18 | 0.78 |
| green (RAL 6016) | 0.05 | 0.30 | 0.65 |
| yellow (RAL 1021) | 0.07 | 0.49 | 0.44 |
| grey (RAL 7035) | 0.05 | 0.45 | 0.50 |

These measurement results are given by way of example for an embodiment of the invention. As already explained at length above, the radiant transmittance can be specifically controlled by the type and structure of the coloured layer 2 or 2', for instance a transition from blue to yellow approximately doubling the transmittance τe, far more than doubling the reflectance ρe and approximately halving the absorbance ae. Therefore, a variety of changes or modifications are possible without leaving the scope of the invention.

## Claims

1. Façade system with a translucent porous insulating material of mineral or organic fibres (1) for passive solar energy utilization with a transparent protection against weather influences in the form of a cover provided on its outer side, wherein the transparent protection is a glass panel, and wherein a temperature profile is achieved, when there is usable solar irradiation, with a maximum value within the insulating layer (1),
**characterized in that**
- between said glass panel and said porous insulating material (1) a separate coloured layer (2; 2') is arranged for controlling the light transmittance τ,
- the coloured layer (2; 2') is of a colour-fast design with respect to UV irradiation,
- the insulating layer (1) with the coloured layer (2; 2') is designed with a light transmittance τ of less than 10% between its outer and inner bounding surfaces,
- the insulating layer with the coloured layer (2; 2') is designed as a façade insulating board (1; 1')
- said insulating material (1) has bonded to the outside said separate coloured layer (2; 2'),
- and wherein said colored layer (2; 2') being formed by a coloured glass-fiber felt which is laminated on the insulating layer (1).

2. Façade system according to Claim 1, **characterized in that** the controlling of the light transmittance τ takes place by different colour graduations of the coloured layer (2; 2').

3. Façade system according to Claim 1 or 2, **characterized in that** the control takes place by increased light reflection.

4. Façade system according to Claim 3, **characterized in that** the light reflection of the coloured layer (2; 2') is controlled by a suitable pigmentation of the colour.

5. Façade system according to Claim 1, **characterized in that** the glass panel is provided with a grid-shaped pattern.

6. Façade system according to one of Claims 1 to 5, **characterized by** a colour-influenced light transmittance τ in such a way that in summer there is no overheating of the building wall adjoining the façade system.

7. Façade system according to one of Claims 1 to 6, **characterized in that** the coloured layer (2; 2') protrudes beyond the insulating layer (1) along two board edges (3, 4; 9, 10) of said façade insulating board (1; 1').

8. Façade system according to Claim 7, **characterized in that** the façade insulating board is preferably square and **in that** the coloured layer (2') protrudes along two opposite board edges (9, 10) beyond the latter.

9. Façade system according to Claim 7, **characterized in that** the coloured layer (2) protrudes along two angularly neighbouring board edges (3, 4) beyond the latter.

10. Façade system according to one of Claims 1 to 9, **characterized in that** metal particles are incorporated in the coloured layer (2; 2').

## Patentansprüche

1. Fassadensystem mit einem transluzenten porösen Dämmstoff (1) aus mineralischen oder organischen Fasern zur passiven Solarenergienutzung mit einem transparenten Witterungsschutz in Form einer an seiner äußeren Seite vorgesehenen Abdeckung, wobei es sich bei dem transparenten Schutz um eine Glasscheibe handelt und wobei, wenn nutzbare Sonnenstrahlung zur Verfügung steht, ein Temperaturprofil mit einem maximalen Wert innerhalb der Dämmschicht (1) erreicht wird.
**dadurch gekennzeichnet, dass**
- zwischen der Glasplatte und dem porösen Dämmstoff (1) eine separate farbige Schicht (2; 2') zur Steuerung des Lichttransmissionsgrades τ angeordnet ist,
- die farbige Schicht (2; 2') in Bezug auf UV-Binstrahlung farbecht ausgebildet ist,
- die Dämmschicht (1) mit der farbigen Schicht (2; 2') mit einem Lichttransmissionsgrad τ von weniger als 10 % zwischen deren äußeren und inneren Begrenzungsflächen konzipiert ist,
- die Dämmschicht mit der farbigen Schicht (2; 2') als eine Fassadendämmplatte (1; 1') ausgebildet ist,
- an der Außenseite des Dämmstoffs (1) die separate farbige Schicht (2; 2') angebracht ist,
- und wobei die farbige Schicht (2; 2') aus einem auf die Dämmschicht (1) aufkaschierten, farbigen Glasvlies bildet ist.

2. Fassadensystem nach Anspruch 1, **dadurch gekennzeichnet, dass** die Steuerung des Lichttransmissionsgrades τ durch unterschiedliche Farbabstufungen der farbigen Schicht (2; 2') erfolgt.

3. Fassadensystem nach Anspruch 1 oder 2, **dadurch gekennzeichnet, dass** die Steuerung durch erhöhte Lichtreflektion erfolgt.

4. Fassadensystem nach Anspruch 3, **dadurch gekennzeichnet, dass** die Lichtreflektion der farbigen Schicht (2; 2') durch eine geeignete Pigmentierung der Farbe erfolgt.

5. Fassadensystem nach Anspruch 1, **dadurch gekennzeichnet, dass** die Glasscheibe mit einem rasterförmigen Muster versehen ist.

6. Fassadensystem nach einem der Ansprüche 1 bis 5, **gekennzeichnet durch** einen farbbeeinflussten Lichttransmissionsgrad τ derart, dass im Sommer keine Überhitzung der an das Fassadensystem angrenzenden Gebäudewand erfolgt.

7. Fassadensystem nach einem der Ansprüche 1 bis 6, **dadurch gekennzeichnet, dass** die farbige Schicht (2; 2') längs der beiden Plattenränder (3, 4; 9, 10) des Fassadendämmplatte (1; 1') über die Dämmschicht (1) hervorsteht.

8. Fassadensystem nach Anspruch 7, **dadurch gekennzeichnet, dass** die Fassadendämmplatte vorzugsweise viereckig ist, und dadurch, dass die farbige Schicht (2') längs zweier gegenüberliegender Plattenränder (9, 10) über diese hervorsteht.

9. Fassadensystem nach Anspruch 7, **dadurch gekennzeichnet, dass** die farbige Schicht (2) längs zweier winklig benachbarter Plattenränder (3, 4) über diese hervorsteht.

10. Fassadensystem nach einem der Ansprüche 1 bis 9, **dadurch gekennzeichnet, dass** Metallpartikel in die farbige Schicht (2; 2') eingearbeitet sind.

## Revendications

1. Système de façade avec un matériau isolant poreux translucide constitué de fibres minérales ou organiques (1) pour utilisation d'énergie solaire passive, comportant une protection transparente contre les influences des intempéries sous la forme d'une couverture prévue sur sa face extérieure, dans lequel la protection transparente est un panneau de verre, et dans lequel un profil de température est obtenu, lorsqu'il y a un rayonnement solaire utilisable, avec une valeur maximale à l'intérieur de la couche isolante (1),
**caractérisé en ce que**
- entre ledit panneau de verre et ledit matériau isolant poreux (1) une couche colorée séparée (2 ; 2') est prévue pour régler la transmittance de lumière τ,
- la couche colorée (2 ; 2') est d'un type à couleur durable en ce qui concerne l'irradiation aux ultraviolets,
- la couche isolante (1) comportant la couche colorée (2 ; 2') est prévue avec une transmittance de lumière τ inférieure à 10% entre ses surfaces de délimitation extérieure et intérieure,
- la couche isolante comportant la couche colorée (2 ; 2 et sous la forme d'un panneau d'isolation de façade (1; 1'),
- ledit matériau isolant (1) est délimité du côté extérieur par ladite couche colorée séparée (2 ; 2'),
- et dans laquelle ladite couche colorée (2 ; 2') est formée par un feutre de fibres de verre coloré qui est contre-collé sur la couche isolante (1).

2. Système de façade selon la revendication 1, **caractérisé en ce que** le réglage de la transmittance de lumière τ est effectué par différentes graduations de couleur de la couche colorée (2 ; 2').

3. Système de façade selon la revendication 1 ou 2, **caractérisé en ce que** le réglage est effectué par réflexion accrue de lumière.

4. Système de façade selon la revendication 3, **caractérisé en ce que** la réflexion de lumière de la couche colorée (2 ; 2') est réglée par une pigmentation appropriée de la couleur.

5. Système de façade selon la revendication 1, **caractérisé en ce que** le panneau de verre comporte un dessin en forme de quadrillage.

6. Système de façade selon une des revendications 1 à 5, **caractérisé par** une transmittance de lumière τ influencée par la couleur d'une manière telle qu'en été il n'y a pas de surchauffe du mur du bâtiment adjacent au système de façade.

7. Système de façade selon une des revendications 1 à 6, **caractérisé en ce que** la couche colorée (2 ; 2') fait saillie au-delà de la couche isolante (1) le long de deux bords du panneau (3, 4; 9, 10) dudit panneau d'isolation de façade (1; 1'),

8. Système de façade selon la revendication 7, **caractérisé en ce que** le panneau d'isolation de façade est de préférence carré, et **en ce que** la couche colorée (2') fait saillie le long de deux bords opposés (9, 10) du panneau, au -delà de ces derniers.

9. Système de façade selon la revendication 7, **caractérisé en ce que** la couche colorée (2) fait saillie le long de deux bords angulairement voisins (3, 4), au-delà de ces derniers.

10. Système de façade selon une des revendications 1 à 9, **caractérisé en ce que** des particules de métal sont incorporées dans la couche colorée (2 ; 2).
